# EUROPÄISCHE PATENTANMELDUNG

(11) **EP 1 944 536 A2**
(43) Veröffentlichungstag der Anmeldung: **16.07.2008**
(21) Anmeldenummer: 07150125.8
(22) Anmeldetag: 19.12.2007
(51) Int. Cl.: F16L 33/207, F16L 13/14

(54) **Presshülse für eine Pressverbindung von Rohren**

(30) Priorität: 29.12.2006 DE 202006019578 U
(71) Anmelder: IPA Produktions- & Vertriebsges.m.b.H., 1230 Wien (AT)
(72) Erfinder: Ogris, Bernhard, Dipl.-Ing., 2511 Pfaffstätten (AT)
(74) Vertreter: Schwabe - Sandmair - Marx

(57) **Zusammenfassung**

Die vorliegende Erfindung betrifft eine Presshülse (1) für eine Pressverbindung für Rohre, wobei die Presshülse (1) die einen zylindrischen Bereich (5) umfasst, der zwischen st!mseitigen Endabschnitten (6, 7) der Presshülse (1) angeordnet ist, wobei ein Endabschnitt (6), der in der bestimmungsgemäßen Anordnung zur Pressverbindung von der Pressverbindung (20) weg weist, eine Einführhilfe für ein Rohr (2) aufweist, wobei der Endabschnitt (7), der in einer Anordnung zur Pressverbindung zu der Pressverbindung (20) ein Rastmittel aufweist, das mit einem Element (4) der Pressverbindung (20) verrasten kann, wobei die Presshülse (1) zwischen dem zylindrischen Bereich (5) und dem die Einführhilfe aufweisenden Endabschnitt (6) wenigstens eine durch Umformen hergestellte Abragung (8) aufweist.

## Beschreibung

Die Erfindung betrifft eine Presshülse für eine Pressverbindung für Rohre, die Pressverbindung und eine Anordnung zum Verpressen der Pressverbindung. Derartige Pressverbindungen werden zum Verbinden von Rohren mit einem anderen Bauteil auf dem Gebiet der Installations- oder Rohrverbindungstechnik eingesetzt. Mit den genannten Pressverbindungen können Rohrverbindungen auf einfache und sehr schnelle Weise hergestellt werden.

Aus dem Stand der Technik bekannte Pressverbindungen werden mit jeweils einem speziell für die jeweilige Pressverbindung vorgesehenen Werkzeug verpresst. Daher kann es vorkommen, dass für eine neu auf den Markt kommende Pressverbindung jeweils ein neues Werkzeug beschafft werden muss. Ferner kann es bei Montagetätigkeiten vorkommen, dass derjenige, der die Pressverbindung herstellen möchte, nicht über das entsprechende Presswerkzeug verfügt. Wird für die Herstellung der Pressverbindung ein anderes als das dafür vorgesehene Presswerkzeug verwendet, besteht die Gefahr, dass die Pressverbindung nicht bestimmungsgemäß abgedichtet oder gar beschädigt oder zerstört wird, da zum Beispiel das Presswerkzeug in einer falschen Position angesetzt wurde.

Zu diesen Problemen möchte die Erfindung Abhilfe schaffen. Es ist daher eine Aufgabe der Erfindung, eine Presshülse, eine Pressverbindung und eine Anordnung zum Verpressen der Pressverbindung bereitzustellen, mit denen die Pressverbindung auch mit unterschiedlichen Werkzeugen einfach und sicher hergestellt werden kann.

Die Aufgabe wird gelöst durch eine Presshülse gemäß den Merkmalen des Anspruchs 1, wobei diese Presshülse in der Pressverbindung nach Anspruch 10 angeordnet ist und wobei die Pressverbindung nach Anspruch 10 einschließlich der Presshülse nach Anspruch 1 in der Anordnung zum Verpressen der Pressverbindung enthalten ist. Vorteilhafte Weiterentwicklungen ergeben sich aus den abhängigen Ansprüchen.

Die Pressverbindung dient für eine Rohrverbindung, insbesondere für Kunststoffrohre oder Kunststoffverbundrohre, wie zum Beispiel Kunststoff-Metall-Kunststoff-Verbundrohre. Die Pressverbindung umfasst eine Stützhülse, eine mit der Stützhülse verbundene Presshülse, die so um die Stützhülse angeordnet ist oder werden kann, dass zwischen Presshülse und Stützhülse ein ringförmiger Spalt gebildet ist oder wird, in den das zu verbindende Rohr eingeführt werden kann. Die Stützhülse befindet sich innerhalb des Rohrs, wo es hauptsächlich die Aufgabe erfüllt, das Zusammenquetschen des Rohrs zu verhindern bzw. als Element zu dienen, welches eine Reaktionskraft, auf die Presskraft des Presswerkzeugs erzeugt. Ferner kann eine Aufgabe der Stützhülse darin bestehen, dass sie mit dem Rohr eine Dichtung bildet, um den Innenbereich des Rohrs gegenüber der Umgebung der Pressverbindung bzw. des Rohrs gegen Austritt eines Mediums aus dem Rohr abzudichten. Ferner kann die Stützhülse dazu dienen, das Rohr im verpressten Zustand gegen eine Verdrehung und/oder eine Axialbewegung relativ zur Stützhülse zu sichern.

Der ringförmige Spalt zwischen der Presshülse und der Stützhülse weist eine radiale Stärke auf, die in etwa der Wandstärke des einzuführenden oder eingeführten Rohrs entspricht bzw. minimal größer ist. Die Presshülse umgibt den zu verpressenden Abschnitt des Rohrs um dessen Umfang. Bei der Herstellung der Pressverbindung wird mit dem Werkzeug, das mehrere Backen umfassen kann, eine radial nach innen gerichtete Kraft auf die Presshülse aufgebracht, wodurch die Presshülse insbesondere plastisch verformt wird und das darunter liegende Rohr gegen die Stützhülse drückt. Durch die plastische Verformung der Presshülse wird das Rohr auch dann noch gegen die Stützhülse gedrückt, wenn die Kraft des Werkzeugs bzw. das Werkzeug beseitigt wurde.

Die Einzelteile der Pressverbindung können für jede Herstellung der Pressverbindung von dem Verwender neu angeordnet werden. Hierzu werden die Presshülse auf das Rohr und anschließend das Rohr auf die Stützhülse geschoben. Die Presshülse wird in axialer Richtung über die Stützhülse geschoben, und anschließend verpresst. Hierbei muss der Verwender der Pressverbindung stets mehrere Einzelteile bereithalten. Es ist daher bevorzugt, dass die Pressverbindung, bevor das Rohr eingeführt wird, aus mehreren zusammengefügten Einzelteilen, die nicht oder nicht ohne weiteres voneinander getrennt werden können, besteht. Der Verwender der Vorrichtung hat dann nur noch ein Teil, nämlich die noch nicht verpresste Pressverbindung mitzuführen. Vorzugsweise ist die Presshülse mit der Stützhülse über eine Verbindungshülse verbunden, wobei die Verbindungshülse jeweils mit der Stützhülse und der Presshülse verrastet ist. Die Verbindungshülse kann beispielsweise einen in radiale Richtung von der Längsachse wegweisenden Einstich oder eine Hinterschneidung aufweisen, in die ein mit einem Rastmittel versehener Endabschnitt der Presshülse einrasten kann. Beispielsweise kann das Rastmittel eine Bördelung oder ein Kragen sein, die oder der radial über den Hauptdurchmesser der Presshülse ragt und somit in die Hinterschneidung oder den Einstich der Verbindungshülse eingreifen kann. Im eingerasteten Zustand ist die Presshülse gegen ein axiales Herausfallen aus der Verbindungshülse gesichert. Ferner kann die Stützhülse ein Rastmittel aufweisen, in welche die Verbindungshülse eingreifen kann. Beispielsweise ist das Rastmittel ein um den äußeren Umfang der Stützhülse umlaufender Einstich, der einen etwas geringeren Durchmesser als der Bereich neben dem Einstich aufweist. Somit kann die Verbindungshülse axial auf die Stützhülse geschoben werden und in dem Rastmittel einrasten. Demnach umfasst eine bevorzugte Pressverbindung eine Stützhülse, eine Presshülse und eine die Stütz- und Presshülse verbindende Verbindungshülse, wobei die einzelnen Hülsen nicht ohne weiteres voneinander lösbar sind.

Die Presshülse umfasst einen zylindrischen Bereich, der zwischen stirnseitigen Endabschnitten der Presshülse angeordnet ist. Das heißt, dass sich die Endabschnitte an den axialen Enden der Presshülse in Bezug auf eine Längsachse der Presshülse oder der Pressverbindung befinden. Der Endabschnitt, der in einem verpressten Zustand von der Pressverbindung weg weist, d.h., in Richtung des langen Endes des Rohres weist, weist eine Einführhilfe für ein Rohr auf. Die Einführhilfe für das Rohr kann das sich trichterförmig aufweitender Abschnitt des Innendurchmessers der Presshülse sein. Vorzugsweise ist die Einführhilfe ein gebördelter Abschnitt, so dass die Wandung der Presshülse sich an deren Innendurchmesser und Außendurchmesser trichterförmig aufweitet.

Der Endabschnitt der in einem verpressten Zustand der Pressverbindung zu der Pressverbindung bzw. zu der Verbindungshülse weist, d.h., in Richtung des kurzen Endes des Rohres weist, weist das Rastmittel auf, das mit einem weiteren Element, insbesondere der Verbindungshülse der Pressverbindung, verrasten kann.

Die Erfindung zeichnet sich dadurch aus, dass die Presshülse zwischen dem zylindrischen Bereich und dem die Einführhilfe aufweisenden Endabschnitt wenigstens eine durch Umformen hergestellte Abragung aufweist. Die Abragung ragt insbesondere vom äußeren Umfang der Presshülse radial nach außen ab. Insbesondere weist der umgeformte Bereich in etwa die gleiche Wandstärke auf, wie die an die Abragung angrenzenden Bereiche der Presshülse. Die Abragung kann beispielsweise durch ein Werkzeug hergestellt werden, das den zunächst zylindrischen Bereich der Presshülse nach außen verformt.

Vorzugsweise wird die wenigstens eine Abragung durch Stanzumformen hergestellt. Unter Stanzumformen wird vorzugsweise die Kombination aus einem Trennverfahren und einem Umformverfahren verstanden. Beispielsweise kann die Abragung mit einer Schnittkante von der Presshülse getrennt und über einen umgeformten Bereich mit der Presshülse verbunden sein. Insbesondere kann der umgeformte Bereich sich in Richtung des das Rastmittel aufweisenden Endabschnitts an die wenigstens eine Abragung anschließen, wobei die Schnittkante sich in Richtung des die Einführhilfe aufweisenden Endabschnitts an die wenigstens eine Abragung anschließt. Auch der umgekehrte Fall ist denkbar, nämlich dass der umgeformte Bereich sich in Richtung des die Einführhilfe aufweisenden Endabschnitts an die wenigstens eine Abragung anschließt, wobei die Schnittkante sich in Richtung des das Rastmittel aufweisenden Endabschnitts wenigstens an die Abragung anschließt.

Die wenigstens eine Abragung kann zum Beispiel im umgeformten Bereich, um einen Winkel umgeformt, beispielsweise gebogen sein, der zwischen Null und 90°, vorzugsweise kleiner als 60° oder 30° sein kann.

Die wenigstens eine Abragung kann sich um einen Teil des Umfangs der Presshülse erstrecken. Wenn die Abragung lediglich durch Umformen hergestellt wurde, kann sie sich vollständig um den Umfang der Presshülse erstrecken. Ist die Abragung zusätzlich mit einem Trennverfahren, insbesondere durch Stanzumformen hergestellt, ist es bevorzugt, dass bei einer einzigen Abragung die Abragung von einem sich in axiale Richtung erstreckenden Steg unterbrochen ist, da anderenfalls die Presshülse in zwei Teile zerfallen würde.

Um den Umfang der Presshülse können insbesondere mehrere Abragungen, wie zum Beispiel 2, 3, 5, 10 oder noch mehr Abragungen auf gleicher axialer Höhe, d.h. insbesondere um einen Kreisring, angeordnet sein. Hierbei ist es ferner bevorzugt, dass die mehreren Abragungen durch sich in axiale Richtung erstreckende Stege getrennt sind. Beispielsweise können die mehreren Abragungen gleichmäßig über den Umfang, insbesondere mit einer gleichmäßigen Winkelteilung der Abragungen und/oder der Stege angeordnet sein.

In einer bevorzugten Ausführungsform weist die Stützhülse zumindest einen primären und zumindest einen sekundären Verbindungsbereich auf, wobei im primären Bereich eine dichtende Verbindung und im sekundären Bereich eine mechanisch feste, insbesondere dreh- und axialfeste, Verbindung zwischen dem Rohr und der Stützhülse nach dem Verpressen besteht. Im bestimmungsgemäß zusammengesetzten Zustand der Pressverbindung, insbesondere in dem Zustand, in dem die Verbindungshülse mit der Presshülse und der Stützhülse verrastet ist, ist es bevorzugt, dass die mindestens eine Abragung der Stützhülse außerhalb des primären Bereichs, beispielsweise im sekundären oder außerhalb des sekundären Bereichs angeordnet ist. Insbesondere kann die mindestens eine Abragung auch außerhalb des sekundären Bereichs angeordnet sein. Beispielsweise kann sich die mindestens eine Abragung in einem Bereich befinden, der sich über der Stützhülse oder nicht mehr über der Stützhülse befindet.

Besonders bevorzugt ist an der Stützhülse oder an der Verbindungshülse ein Axialanschlag für das in den Ringspalt eingeführte oder einzuführende Rohr vorgesehen. Der Anschlag muss nicht notwendigerweise eine Fläche sein sondern kann z.B. auch ein Radius sein, in den die ringförmige Kante der Stirnseite des Rohrs anstößt.

Ein weiterer Aspekt der Erfindung betrifft eine Anordnung zum Verpressen der genannten Pressverbindung. Zum Verpressen wird um die Pressverbindung ein Werkzeug, insbesondere wenigstens eine Pressbacke, vorzugsweise zwei, drei oder vier Pressbacken angelegt, wobei die wenigstens eine Pressbacke eine radial auf die Presshülse wirkende Druckkraft ausüben kann. Nach dem Verpressen ist das Rohr dichtend und mechanisch fest mit der Pressverbindung verbunden.

Bevorzugt ist die wenigstens eine Pressbacke zwischen der Verbindungshülse und der wenigstens einen Abragung angeordnet. Beispielsweise kann die wenigstens eine Backe sich in einem axialen Anschlag mit der Verbindungshülse und/oder mit der wenigstens einen Abragung oder der Einführhülse des Endabschnitts befinden. Insbesondere kann die wenigstens eine Backe im Bereich der mindestens einen Abragung eine Aussparung aufweisen, so dass auf die mindestens eine Abragung kein Druck beim Verpressen ausgeübt wird. Ferner kann eine solche Aussparung auch für die Verbindungshülse der wenigstens einen Backe vorgesehen sein. Mit der Abragung der Presshülse kann somit mit einer Vielzahl von Werkzeugen sichergestellt werden, dass der Verwender des Werkzeugs und der Pressverbindung beim Anordnen der Pressverbindung im Werkzeug merkt, wenn sich die Pressverbindung in einer, bezogen auf die wenigstens eine Backe, zur Verpressung bestimmungsgemäßen axialen Position befindet. Beispielsweise kann durch den von der Abragung bereitgestellten Axialanschlag, insbesondere zusätzlich mit dem Anschlag, der durch die Verbindungshülse bereitgestellt wird, die Pressverbindung nach dem Einführen ins Werkzeug in beide Axialrichtungen festgelegt werden, so dass der Anwender die Pressverbindung nicht mehr versehentlich verrutschen kann. Somit wird die Gefahr, dass die Pressverbindung fehlerhaft wird, nahezu ausgeschlossen. Auch bei der Verwendung von anderen Backen kann eine sichere Verpressung stattfinden. Die axiale Festlegung der Pressverbindung relativ zur Backe kann beispielsweise auch über eine Aussparung in der Backe stattfinden, welche die Verbindungshülse umgreift. Alternativ kann die Backe auch nur in einer Richtung, zum Beispiel in einem Anschlag mit der Verbindungshülse die Pressverbindung gegen ein axiales Verschieben sichern, wie es bei herkömmlichen Werkzeugen der Fall ist. Auch Werkzeuge, die einen Pressdruck auf die mindestens eine Abragung ausüben, bevor sie die Presshülse als solche verpressen, sind auch bei der erfindungsgemäßen Pressverbindung bzw. der erfindungsgemäßen Presshülse anwendbar, da wegen der geringen Wandstärke der mindestens einen Abragung die mindestens eine Abragung vor dem Verpressen in Richtung der Mittelachse der Pressverbindung gedrückt wird. Die mindestens eine Abragung ist vorzugsweise an so einer Stelle der Presshülse angeordnet, dass in diesem Fall die Pressverbindung nicht beeinträchtigt wird. Somit ermöglicht die erfindungsgemäße Presshülse sowohl die Verpressung mit einem auf sie abgestimmtes Werkzeug, als auch mit einem beliebigen anderen Werkzeug, wodurch die Presshülse flexibel einsetzbar ist.

Die Erfindung wurde anhand mehrerer Ausführungsformen beschrieben. Im Folgenden wird die Erfindung anhand von Figuren beschrieben. Die dabei offenbarten Merkmale bilden allein und in Kombination den Gegenstand der Erfindung vorteilhaft weiter. Es zeigen:
- Figur 1: eine Presshülse in einer ersten Ausführungsform,
- Figur 2: eine Pressverbindung mit der Presshülse aus Figur 1,
- Figur 3: eine Anordnung zum Verpressen der Pressverbindung aus Figur 2 mit einer TH-Backe,
- Figur 4: eine Anordnung zum Verpressen der Pressverbindung aus Figur 2 mit einer H-Backe,
- Figur 5: eine Anordnung zum Verpressen der Pressverbindung aus Figur 2 mit einer U-Backe,
- Figur 6: eine Presshülse in einer zweiten Ausführungsform,
- Figur 7: eine Pressverbindung mit der Presshülse aus Figur 6,
- Figur 8: eine Anordnung zum Verpressen der Pressverbindung aus Figur 7 mit einer TH-Backe,
- Figur 9: eine Anordnung zum Verpressen der Pressverbindung aus Figur 7 mit einer H-Backe,
- Figur 10: eine Anordnung zum Verpressen der Pressverbindung aus Figur 7 mit einer U-Backe,
- Figur 11: eine Pressverbindung mit einer Presshülse in einer dritten Ausführungsform,
- Figur 12: eine Anordnung zum Verpressen der Pressverbindung aus Figur 11 mit einer TH-Backe,
- Figur 13: eine Anordnung zum Verpressen der Pressverbindung aus Figur 11 mit einer H-Backe,
- Figur 14: eine Anordnung zum Verpressen der Pressverbindung aus Figur 11 mit einer U-Backe.

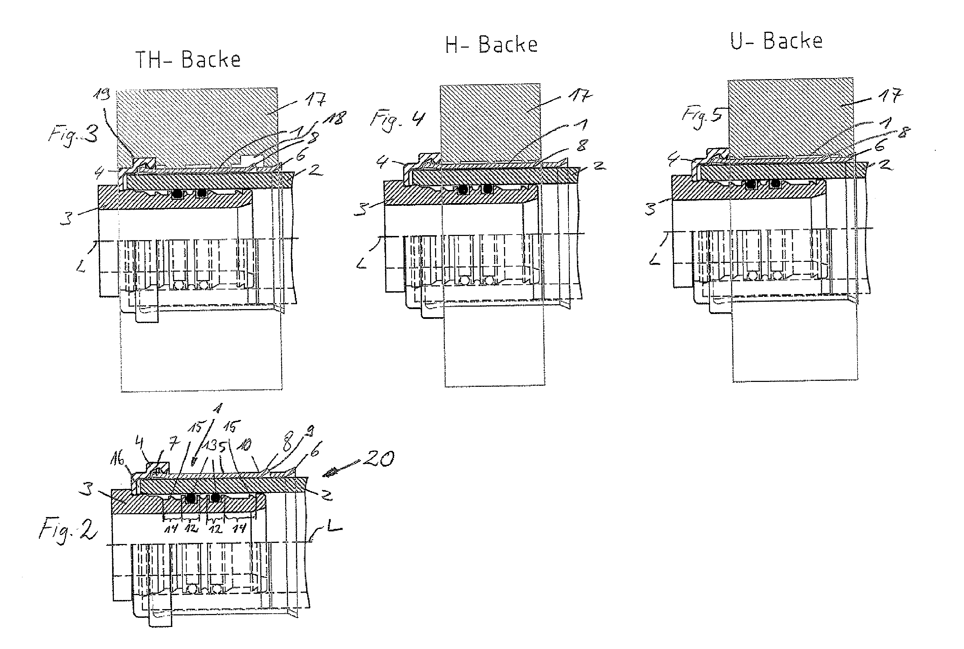

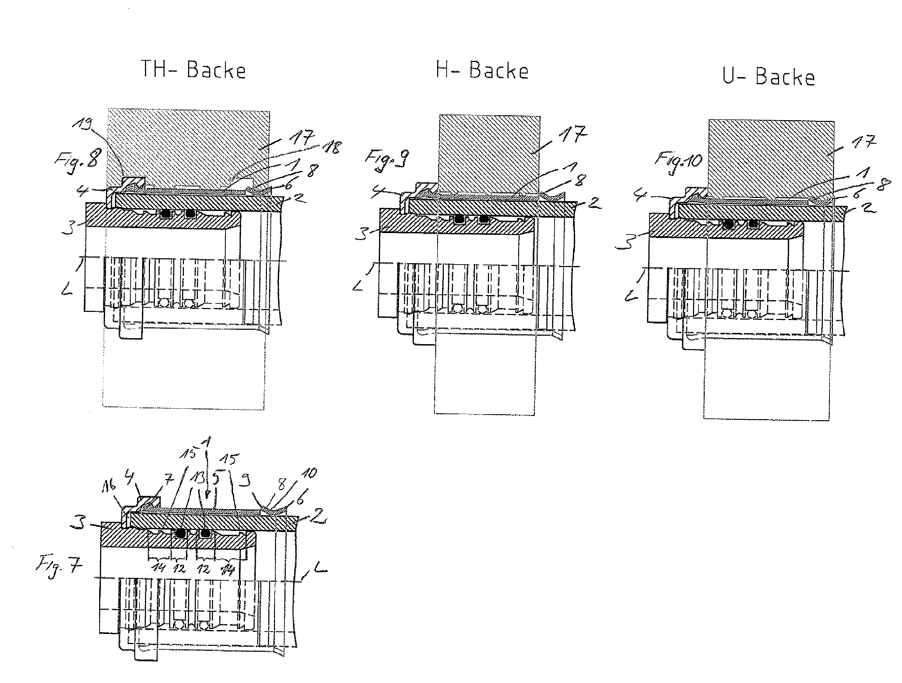

Die in den Figuren 2, 7 und 11 gezeigten Pressverbindungen 20 unterscheiden sich lediglich in der Ausgestaltung ihrer Presshülse 1, weshalb im Folgenden die verschiedenen Ausführungsformen der Presshülse 1 gesondert und die Pressverbindung 20 als solche nur einmal beschrieben werden.

Ebenso werden die in den Figuren 3, 8 und 12 gezeigten Anordnungen zum Verpressen der Pressverbindung 20 mit einer TH-Backe nur einmal beschrieben. Gleiches gilt für die Anordnungen aus den Figuren 4, 9 und 13 mit einer H-Backe, sowie aus den Figuren 5, 10 und 14 mit einer U-Backe entsprechend.

Die Pressverbindungen aus den Figuren 2, 7 und 11 umfassen eine Stützhülse 3, eine mit der Stützhülse 3 verrastete Verbindungshülse 4 und eine mit der Verbindungshülse 4 verrastete Presshülse 1. Die Stützhülse 3 weist einen Durchmesser auf, der gleich oder minimal kleiner ist als der Innendurchmesser des Rohres 2, so dass das Rohr 2 auf die Stützhülse 3 aufgeschoben werden kann. Die Stützhülse 3 weist ferner einen ringförmigen Einstich auf, in den die Verbindungshülse 4 eingerastet werden kann, so dass die Verbindungshülse 4 nicht oder nur kaum relativ zur Stützhülse 3 verschiebbar ist. Ferner weist die Stützhülse 3 zwei primäre Verbindungsbereiche 12 auf, mit denen nach dem Verpressen der Pressverbindung der Innenraum des Rohrs gegenüber der Umgebung der Pressverbindung 20 abgedichtet wird. Hierzu weisen die primären Bereiche 12 ringförmig umlaufende Nuten auf, in denen Dichtungen 13, insbesondere O-Ringe, angeordnet sind. Die O-Ringe weisen einen Außendurchmesser auf, der vorzugsweise größer ist als der Durchmesser der Stützhülse 3 in dem Bereich, der axial neben der Dichtung angeordnet sind.

Ferner weist die Stützhülse 3 neben den primären Bereichen 12 sekundäre Bereiche 14 auf, die nach dem Verpressen der Pressverbindung 20 das Rohr 2 für Dreh- und/oder Axialbewegungen relativ zur Stützhülse 3 sichern. Der Bereich zwischen den primären Bereichen 12 kann ebenfalls als sekundärer Bereich bezeichnet werden.

Die Verbindungshülse 4 bildet am Ende der Stützhülse 3 einen Axialanschlag für das Rohr 2. Die Verbindungshülse 4 weist einen ringförmig umlaufenden Einstich auf, der sich aus Richtung der Längsachse L in die Stützhülse 4 erstreckt. Die Presshülse 1 weist einen mit einem Rastmittel 7 versehenen Endabschnitt auf, der nach außen aufgebördelt ist und somit in den Einstich der Verbindungshülse 4 einrastet. Dadurch wird ein axiales Herausfallen der Presshülse 1 aus der Verbindungshülse 4 verhindert.

Die Presshülse 1 weist an dem Endabschnitt 6, der dem mit dem Rastmittel versehenen Endabschnitt 7 gegenüberliegt, eine Einführhilfe für das Rohr 2 auf. Die Einführhilfe kann zusätzlich noch als Anschlag für eine Backe, insbesondere U-Backe, dienen. Der Endabschnitt 6 ist trichterförmig nach außen gebördelt, so dass der Endabschnitt in etwa die Wandstärke der Presshülse 1 und einen Winkel zur Längsachse von ca. 30° aufweist.

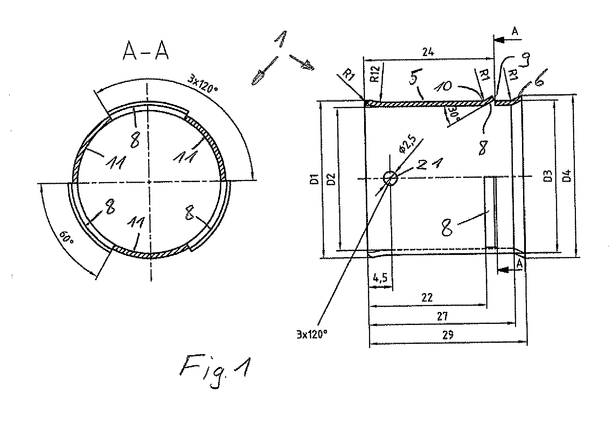

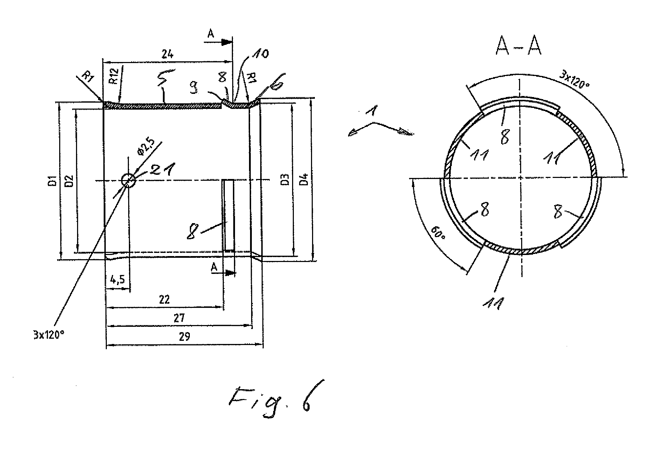

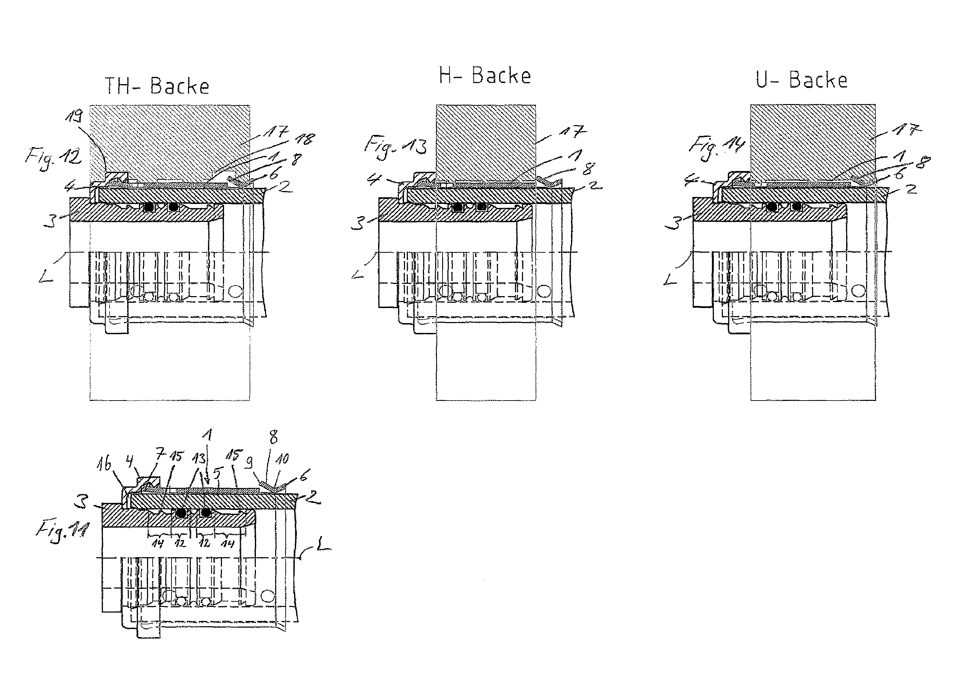

Die Presshülse 1 weist ferner einen in etwa zylindrischen Bereich 5 auf, der in der Pressverbindung 20 vorzugsweise über den primären Bereichen 12 und insbesondere auch über den sekundären Bereichen 14 angeordnet ist. Zwischen dem zylindrischen Bereich 5 und dem Endabschnitt 6 ist die wenigstens eine Abragung 8 angeordnet. Wie in Figur 1 stellvertretend für die Presshülsen aus den Pressverbindungen 20 gemäß der Figuren 6 und 11 gezeigt wird, sind insbesondere drei an einem sich um die Presshülse 1 erstreckenden Kreisring von der Presshülse 1 gebildet. Die Abragungen 8 sind als Ringsektoren mit einem Sektorwinkel von 60° gleichmäßig um den Umfang der Presshülse 1 gebildet. Die Abragungen 8 werden durch Stege 11 getrennt, deren Sektorwinkel entsprechend der Anzahl der Abragungen, der Sektorwinkel der Abragungen und der Anzahl der Abragungen angepasst sind. In dem gezeigten Beispiel weisen auch die Stege einen Sektorwinkel von 60° auf.

Bei der in Figur 1 gezeigten Presshülse 1 sind die Abragungen 8 durch Stanzumformen hergestellt. Die durch den Trennvorgang vom Stanzumformen hergestellte Schnittkante 9 schließt sich an die wenigstens eine Abragung 8 in Richtung des Endabschnitts 6 an. Ferner ist die wenigstens eine Abragung 8 mit einem Winkel von 30° durch eine Umformung im umgeformten Bereich 10, welche durch das Umformen beim Stanzumformen erzeugt wird, gegenüber der Längsachse um 30° nach außen gebogen. Vorteilhaft weist die Abragung 8 die gleiche Wandstärke auf, wie der zylindrische Bereich 5.

Um ein besseres mechanisches Verhalten der Presshülse 1 beim Verpressen zu erhalten, sind zu den Endabschnitten 6, 7 versetzt angeordnete Bohrungen 21 in der Wandung der Presshülse 1 enthalten. Vorzugsweise liegen diese Bohrungen 21 außerhalb eines für den primären und insbesondere auch den sekundären Bereich vorgesehenen Bereichs.

Die Presshülse aus den Figuren 6 bis 10 entspricht im Wesentlichen der Presshülse 1, wobei die Abragung 8 so angeordnet ist, dass die Schnittkante 9 in Richtung des Endabschnitts 7 weist und der umgeformte Bereich 10 sich in Richtung des Endabschnitts 6 anschließt. Mit anderen Worten ist die Ausrichtung der Abragung 8 im Vergleich zu Figur 1 umgekehrt.

Zwischen dem umgeformten Bereich 10, der sich an die Abragung 8 anschließt, und dem Endabschnitt 6 der Presshülse 1 befindet sich ein zylindrischer Bereich, der vom Durchmesser in etwa dem zylindrischen Bereich 5 entspricht.

Die in Figur 11 gezeigte Ausführungsform der Presshülse 1 ist hinsichtlich der Ausrichtung der Abragung 8 identisch mit der in Figur 6 gezeigten Ausführungsform, wobei sich zwischen dem umgeformten Bereich 10, der sich an die Abragung 8 anschließt und dem Endabschnitt 6 kein zylindrischer Bereich angeordnet ist. Vielmehr schließt sich der umgeformte Bereich 10 unmittelbar sowohl an den gebördelten Endabschnitt 6 und die stanzumgeformte Abragung 8 an.

Bei den Anordnungen zum Verpressen der Pressverbindungen mit einer TH-Backe (Figuren 3, 8 und 12) weist die Backe 17 eine Aussparung 19 auf, die einen Teil, insbesondere den Teil, der den Einstich für das Rastmittel der Presshülse 1 aufweist, umgreift, so dass durch die Stirnseiten der Aussparung 19 Axialanschläge gebildet werden, die eine axiale Verschiebung der Pressverbindung relativ zu der Backe 17 verhindern. Ferner weist die Backe 17 eine Aussparung 18 auf, in die die Abragung 8 ragt und somit nicht von der Richtung auf die Längsachse wirkenden Presskraft der Backe 17 beaufschlagt wird.

Gleichzeitig bildet der Endabschnitt 6 einen weiteren Axialanschlag für die Backe 17. Vorzugsweise wirkt die Backe 17 auf den zylindrischen Bereich 5 und insbesondere auch auf die primären Bereiche 12 und sekundären Bereiche 14.

Bei den Anordnungen zum Verpressen der Pressverbindungen mit einer H-Backe (Figurgen 4, 9 und 13) bilden sowohl die Abragung 8 als auch die Verbindungshülse 5 Axialanschläge für die Backe 17, wodurch eine Axialbewegung der Pressverbindung 20 relativ zur Backe 17 wirkt wird. Die Backe 17 wird mit ihrer Presskraft auch hier auf die primären Bereiche 12 und die sekundären Bereiche 14 der Stützhülse 3.

Die Anordnungen zum Verpressen der Pressverbindungen mit einer U-Backe, wie sie in den Figuren 5, 10 und 14 dargestellt werden, sollen zeigen, dass die Pressverbindung 20 auch mit einem Werkzeug hergestellt werden kann, welches im Grunde nicht für die gezeigte Pressverbindung 20 vorgesehen ist. Die Verbindungshülse 4 und der Endabschnitt 6 bilden jeweils einen Axialanschlag für die Backe 17, so dass die Pressverbindung 20 relativ zur Backe 17 nicht mehr axial bewegbar ist. Obwohl die Backe 17 keine Aussparung für die Abragungen 8 aufweist, ist dennoch ein sicheres Verpressen der Pressverbindung 20 möglich. Die Abragung 8 wird bei der Bewegung der Backe 17 in Richtung auf die Längsachse L verformt und die Pressverbindung wird hergestellt, wenn die Backe 17 den zylindrischen Bereich 5 der Presshülse 1 weiterverformt. Die Verformung der Abragung 8 hat auf die Funktionalität der Pressverbindung keinen oder nur einen unwesentlichen Einfluss.

### Bezugszeichenliste:

- 1: Presshülse
- 2: Rohr
- 3: Stützhülse
- 4: Verbindungshülse
- 5: zylindrischer Bereich
- 6: Endabschnitt mit Einführhilfe
- 7: Endabschnitt mit Rastmittel
- 8: Abragung
- 9: Schnittkante
- 10: umgeformter Bereich
- 11: Steg
- 12: primärer Verbindungsbereich
- 13: Dichtung
- 14: sekundärer Verbindungsbereich
- 15: Nocken/Rippe
- 16: Axialanschlag
- 17: Pressbacke
- 18: Aussparung für Abragung
- 19: Aussparung für Verbindungshülse
- 20: Pressverbindung
- 21: Bohrung
- L: Längsachse

## Patentansprüche

1. Presshülse (1) für eine Pressverbindung für Rohre, die Presshülse (1) umfassend:
a) einen zylindrischen Bereich (5), der zwischen stirnseitigen Endabschnitten (6, 7) der Presshülse (1) angeordnet ist,
b) wobei der Endabschnitt (6), der in der bestimmungsgemäßen Anordnung zur Pressverbindung von der Pressverbindung (20) weg weist, eine Einführhilfe für ein Rohr (2) aufweist,
c) wobei der Endabschnitt (7), der in einer Anordnung zur Pressverbindung zu der Pressverbindung (20) weist, ein Rastmittel aufweist, das mit einem Element (4) der Pressverbindung (20) verrasten kann,
**dadurch gekennzeichnet, dass**
d) die Presshülse (1) zwischen dem zylindrischen Bereich (5) und dem die Einführhilfe aufweisenden Endabschnitt (6) wenigstens eine durch Umformen hergestellte Abragung (8) aufweist.

2. Presshülse (1) nach dem vorhergehenden Anspruch, wobei die wenigstens eine Abragung (8) durch Stanzumformen hergestellt ist.

3. Presshülse (1) nach dem vorhergehenden Anspruch , wobei die Abragung (8) mit einer Schnittkante (9) von der Presshülse (1) getrennt ist und über einen umgeformten Bereich (10) mit der Presshülse (1) verbunden ist.

4. Presshülse (1) nach dem vorhergehenden Anspruch, wobei der umgeformte Bereich (10) sich in Richtung des das Rastmittel aufweisenden Endabschnitts (7) an die Abragung (8) anschließt und wobei die Schnittkante (9) sich in Richtung des die Einführhilfe aufweisenden Endabschnitts (6) an die wenigstens eine Abragung (8) anschließt.

5. Presshülse nach Anspruch 3, wobei der umgeformte Bereich (10) sich in Richtung des die Einführhilfe aufweisenden Endabschnitts (6) an die mindestens eine Abragung (8) anschließt und wobei die Schnittkante (9) sich in Richtung des das Rastmittel aufweisenden Endabschnitts (7) an die wenigstens eine Abragung (8) anschließt.

6. Presshülse nach einem der vorhergehenden Ansprüche, wobei die wenigstens eine Abragung (8) im umgeformten Bereich (10) um einen Winkel gebogen ist, der zwischen Null und 90°, vorzugsweise kleiner als 60° oder 30° sein kann.

7. Presshülse (1) nach einem der vorhergehenden Ansprüche, wobei die wenigstens eine Abragung (8) sich um einen Teil des Umfangs der Presshülse (1) erstreckt.

8. Presshülse (1) nach einem der vorhergehenden Ansprüche, wobei um den Umfang mehrere Abragungen (8) auf gleicher axialer Höhe angeordnet sind.

9. Presshülse (1) nach einem der zwei vorhergehenden Ansprüche, wobei bei einer einzigen Abragung (8) die Abragung (8) von einem sich in axiale Richtung erstreckenden Steg (11) unterbrochen ist oder wobei bei mehreren Abragungen (8) die Abragungen durch sich in axiale Richtung erstreckende Stege (11) getrennt sind.

10. Pressverbindung (20) für Rohre, die Pressverbindung umfassend:
a) eine Stützhülse (3),
b) eine mit der Stützhülse (3) verbundene Presshülse (1), die so um die Stützhülse (3) angeordnet ist, dass zwischen der Presshülse (1) und der Stützhülse (3) ein ringförmiger Spalt gebildet ist, in den ein zu verbindendes Rohr (2) eingeführt werden kann,
**dadurch gekennzeichnet, dass**
c) die Presshülse (1) nach dem Merkmalen des Anspruchs 1 ausgebildet ist.

11. Pressverbindung (20) nach dem vorhergehenden Anspruch, wobei die Presshülse (1) mit der Stützhülse (3) über eine Verbindungshülse (4) verbunden ist, wobei die Verbindungshülse (4) jeweils mit der Stützhülse (3) und der Presshülse (1) verrastet ist.

12. Pressverbindung (20) nach einem der zwei vorhergehenden Ansprüche, wobei die Stützhülse (3) zumindest einen primären Verbindungsbereich (12) und zumindst einen sekundären Verbindungsbereich (14) aufweist, wobei im primären Bereich eine dichtende Verbindung und im sekundären Bereich (14) eine mechanisch feste, insbesondere dreh- und axialfeste Verbindung nach dem Verpressen zwischen dem Rohr (2) und der Stützhülse (3) besteht.

13. Pressverbindung (20) nach dem vorhergehenden Anspruch, wobei die mindestens eine Abragung (8) der Stützhülse (3) außerhalb des primären Bereichs (12) angeordnet ist.

14. Pressverbindung nach einem der zwei vorhergehenden Ansprüche, wobei die mindestens eine Abragung (8) außerhalb, insbesondere auch außerhalb, des sekundären Bereichs (14) angeordnet ist.

15. Pressverbindung (20) nach einem der fünf vorhergehenden Ansprüche, wobei die mindestens eine Abragung (8) sich bezüglich ihrer axialen Position im Bereich oder außerhalb des Bereichs der Stützhülse (3) befindet.

16. Pressverbindung (20) nach einem der sechs vorhergehenden Ansprüche, wobei an der Stützhülse (3) oder der Verbindungshülse (4) ein Axialanschlag (16) für das Rohr (2) gebildet ist.

17. Anordnung zum Verpressen einer Pressverbindung, die Anordnung umfassend:
a) wenigstens eine Pressbacke (17) und
b) eine Pressverbindung (20) nach Anspruch 10,
c) wobei die Pressbacke (17) eine in Richtung auf die Presshülse (1) wirkende Druckkraft ausüben kann.

18. Anordnung nach dem vorhergehenden Anspruch, wobei die wenigstens eine Pressbacke (17) zwischen der Verbindungshülse (4) und der wenigstens einen Abragung (8) angeordnet ist.

19. Anordnung nach einem der zwei vorhergehenden Ansprüche, wobei die wenigstens eine Backe (17) sich in einem axialen Anschlag mit der Verbindungshülse (4) befindet.

20. Anordnung nach dem vorhergehenden Anspruch, wobei sich die wenigstens eine Backe (17) zusätzlich in einem Anschlag mit der wenigstens einen Abragung (8) oder dem die Einführhilfe aufweisenden Endabschnitt (6) befindet.

21. Anordnung nach einem der vier vorhergehenden Ansprüche, wobei die wenigstens eine Backe (17) im Bereich der mindestens einen Abragung (8) eine Aussparung aufweist, so dass auf die mindestens eine Abragung (8) beim Verpressen kein Druck ausgeübt wird.

22. Anordnung nach einem der fünf vorhergehenden Ansprüche, wobei die mindestens eine Backe (17) eine Aussparung (19) aufweist, die wenigstens einen Teil der Verbindungshülse (4) umgreift.
